# EUROPEAN PATENT SPECIFICATION

(11) **EP 2 753 183 B1**
(45) Date of publication and mention of the grant of the patent: **07.11.2018**
(21) Application number: 12758979.4
(22) Date of filing: 07.09.2012
(51) Int. Cl.: A21D 2/36, A21D 13/00, A23P 20/00

(54) **CRACKER WITH MARBLED-LIKE APPEARANCE AND METHODS FOR PRODUCING THEM**
Kräcker MIT MARMORIERTEM ERSCHEINUNGSBILD UND VERFAHREN ZU DEREN HERSTELLUNG
BISCUIT SALÉ À ASPECT MARBRÉ ET PROCÉDÉ DE FABRICATION

(30) Priority: 09.09.2011 US 201161533075 P
(43) Date of publication of application: 16.07.2014
(73) Proprietor: Intercontinental Great Brands LLC, East Hanover, NJ 07936 (US)
(72) Inventor: KATZ, Meagan, Caroline, Ringwood, New Jersey 07456 (US); VEMULAPALLI, Vani, Whippany, New Jersey 07981 (US); KARWOWSKI, Jan, Franklin Lakes, New Jersey 07417 (US)
(74) Representative: Boult Wade Tennant LLP
(86) International application number: PCT/US2012/054188
(87) International publication number: WO 2013/036782

(56) References cited:
- WO-A1-2008/093301
- WO-A1-2011/123770
- US-A1- 2008 206 424
- US-A1- 2008 213 432
- US-A1- 2010 215 826
- Anonymous: "Green Tea Marble Cookies", , 11 January 2011 (2011-01-11), pages 1-2, XP002688029, Retrieved from the Internet: URL:http://wensdelight.blogspot.nl/2011/01 /cny-bakes-2011-green-tea-marble-cookies.h tml [retrieved on 2012-11-26]
- Anonymous: "Recipes Marblised chocolate and blueberry cream cheese cookies", , 20 May 2011 (2011-05-20), pages 1-3, XP002688030, Retrieved from the Internet: URL:http://www.phuocndelicious.com/2011/05 /20/marblised-chocolate-and-blueberry-crea m-cheese-cookies/ [retrieved on 2012-11-26]
- Anonymous: "Chinese Marble Cookies", , 24 February 2007 (2007-02-24), pages 1-1, XP002688031, Retrieved from the Internet: URL:http://www.food.com/recipe/chinese-mar ble-cookies-213700 [retrieved on 2012-11-26]
- Anonymous: "Cracker with carrot and beetroot", , 12 June 2009 (2009-06-12), pages 1-2, XP002688035, Retrieved from the Internet: URL:http://goneraw.com/recipe/cracker-carr ot-and-beetroot [retrieved on 2012-11-23]

## Description

### FIELD

The present application generally relates to crackers having marbled surfaces. More particularly, the present application relates to crackers having a marbled surface created by one or more inclusions.

### BACKGROUND

US2008/206424 discloses a fruit based dough and fabricated snack products made therefrom.

Crackers, chips and crisps may be prepared in a variety of ways using traditional dough-based ingredients. Further, crackers and chips have been produced using pureed or powdered materials such as vegetables, fruits, and other inclusions. By including vegetables, the overall nutritional value of the cracker may be improved. For example, vegetables include various vitamins, minerals and macronutrients to improve the nutritional value of the product. Further, the pureed or powdered vegetables may also provide flavors and other organoleptic properties to the product.

However, these products generally are prepared such that the pureed or powdered vegetables are evenly dispersed throughout the cracker dough and have such a small particle size that the vegetable material may not be visible, only appear as small flecks, or otherwise only minimally affect the color or texture of the product. The purees or powders result in loss of product identity and structure of the fruit or vegetable when included in the dough. Therefore, the resultant product may not be very distinguishable from other products which do not contain vegetable materials. Moreover, the taste profile may be relatively bland as the vegetable materials are generally spread evenly throughout the cracker in relatively low concentrations.

In some cases, non-uniform snacks have been proposed by forming a variegated snack product by comingling two different dough portions where each dough portion includes a puree of fruit. However, this approach still results in evenly dispersing the puree throughout the dough portion(s) resulting in the same loss of identity and structure as the fruit or vegetables described above.

### SUMMARY

The present invention provides a cracker having a marbled surface and a method for making a cracker having a marbled surface, as defined in the claims appended hereto.

In one approach, a cracker having a marbled surface is provided with visually identifiable pieces smeared on one or more surfaces of the cracker. The cracker includes a cracker portion formed from a dough composition with flour, starches, sugars, oil, flavorings, and leaveners. Once heated, cooked, baked, fried, and the like, the dough composition has a cracker appearance. The cracker also includes an inclusion portion having inclusions with that remain as visually identifiable pieces of the inclusions on the cracker surface. In one aspect, the inclusions remain intact and smeared about a surface of the cracker such that an inclusion appearance has at least one of a contrasting color, shading and texture when compared to the cracker portion. In this aspect, the inclusions generally have 2 to 60 percent sugar, and in other cases, 20 to 60 percent sugar, which tends to allow the inclusions to remain intact and visually identifiable pieces of the inclusions on the cracker surface. The cracker also has at least a portion of each of the cracker portion and the inclusion portion being visible on the marbled surface. The inclusion portion forming at least one contiguous inclusion or piece covering at least 1 percent of the marbled surface where at least one of the visually identifiable pieces of the inclusions has a smeared portion on the cracker surface and an embedded portion extending into a body of the cracker. The visually identifiable pieces of the inclusions are vegetable pieces selected from the group consisting of sweet potatoes, yams, beet roots, tubers, carrots and mixtures thereof. The cracker has a select ratio of inclusion size to thickness of 0.7 to 1.5 to form the inclusion appearance.

In another approach, a method for making a cracker having a marbled surface is described. The method includes pre-hydrating a plurality of dehydrated vegetable pieces to form hydrated vegetable pieces. Then, the hydrated vegetable pieces are blended into a dough composition comprising flours, starches, sugars, oil, flavorings, leaveners. The dough is then laminated as a combined mixture to provide a laminated mixture. Thereafter, the laminated mixture is passed through one or more rolls to create a sheet having a marbled surface formed by at least a portion of the hydrated vegetable pieces smeared on the surface of the crackers. In one approach, at least a portion of each of the dough composition and the inclusion composition being visible on the marbled surface such that the inclusion composition forms at least one contiguous inclusion covering at least 1 percent of the marbled surface. In one approach, the smeared, marbled surface is possible because the method includes a step of passing the formed composition through a steam curtain and then into an oven, which tends to allow the higher moisture inclusions and dough to be effectively baked, cooked, dried, or heated in the oven. The visually identifiable pieces of the inclusions are vegetable pieces selected from the group consisting of sweet potatoes, yams, beet roots, tubers, carrots and mixtures thereof. The cracker has a select ratio of inclusion size to thickness of 0.7 to 1.5 to form the inclusion appearance.

### BRIEF DESCRIPTION OF THE DRAWINGS

FIG. 1A is a perspective view of one side of an exemplary marbled cracker;
FIG. IB is a perspective view of a second side of the exemplary marbled cracker of FIG. 1A;
FIG. 1C is a cross-sectional view of an exemplary marbled cracker; and
FIG. 2 is a process flow diagram representing one process for forming marbled crackers or crisps.

### DETAILED DESCRIPTION

A cracker is provided having at least one marbled outer surface including discretely identifiable inclusions that maintain at least a portion of its product identity, structure, and/ or physical consistency of the inclusion. That is, the inclusion which is a vegetable piece, maintains at least a portion of its size, shape, and/ or piece integrity so that it remains visually identifiable as the vegetable in and/ or on the finished cracker product. The marbled surface includes a cracker portion formed of a dough composition and an inclusion portion smeared or spread about at least one of the outer surfaces and wherein the inclusion maintains characteristics and identity of the inclusion source and has a contrasting color, texture, appearance and/ or taste when compared to the cracker and dough portion. The dough composition and inclusion composition are combined such that at least a portion of each of the dough composition and the inclusion composition are visible on the marbled surface. In one form, the inclusion composition forms at least one contiguous inclusion smeared or otherwise covering at least 1 to 5 percent of the outer surface area of a cracker surface. In another form, one or more inclusions (in total or in combination) could cover from 5 to 50% of the total outer surface area of one side of the cracker's outer surface to form the marbled appearance. In another form, some of the inclusions may extend over a portion of the cracker outer surface to define the marbled appearance and, at the same time, extend internally to the cracker. In another form, some inclusions may form a portion of the marbled surface on both sides of the cracker and extend through an internal portion of the cracker body at the same time. In yet another form, the cracker may have both inclusions forming a marbled surface as well as whole inclusions contained completely within the body of the cracker that are not smeared or visible on a surface.

Further, the inclusions may have a contrasting color when compared to the dough composition. For example, the dough composition may have a generally light color whereas the inclusions may have a dark color such as, but not limited to, red, orange, yellow, or green. Additionally, the inclusions may provide not only color contrast but also unique texture and taste profile. Furthermore, the inclusions may enhance the nutrition of the cracker by way of vitamins, minerals, and other micro nutrients. In one form, the inclusions give the cracker a generally marbled appearance that may be more attractive and believable to consumers. Further, the marbling-appearance enhances consumer appeal and nutritional properties.

In another aspect, the cracker may be processed in a variety of different ways and may include various combinations of different ingredients. In one form, a vegetable composition, such as sweet potato, may be included as granules, pieces, or particles in the inclusion composition. In this regard, the vegetable composition may be a dehydrated material that is then rehydrated when combined with the dough composition. The combined composition is then passed through one or more rollers to be laminated.

The embedded inclusions in the dough are effective to give the marbled appearance. By one approach, the inclusions are initially dehydrated and hydrated during processing to an effective moisture content that is suitable to sufficiently soften the inclusions but still allow the inclusion to maintain its physical particle identity when processed. The hydrated inclusions are conditioned and then flattened during a sheeting process using reduction rolls to form the marbling. The inclusions include pieces of vegetables with high levels of sugar, namely pieces of root vegetables including sweet potato, yams, tubers, beet roots, carrots, and the like. The inclusions may also include other types of vegetable pieces and may include pieces of legumes such as beans, peas, and the like. In other cases, the inclusions may include pumpkin, squash, and zucchini, and mixtures thereof.

It has been discovered that not all vegetables are suitable for forming the marbled surface appearance. In general, vegetables with high levels of sugar are most suitable for forming the marbled surface. For example, vegetable with at least 15 percent, in some cases at least 20 percent sugar are effective in forming a marbled appearance. In other cases, the vegetables may include 15 to 60 percent sugar, and in yet other cases, 20 to 60 percent sugar. In yet other approaches, the vegetables may have 2 to 60 percent sugar.

In another approach, the production process may involve hydrating and softening the inclusion pieces under elevated temperatures prior to dough formation. The process allows manufacturing using high levels of the inclusions. Optionally, the inclusions may be added to the dough or during lamination/ sheeting stage. The marbled inclusions become part of the product matrix that are noticeable and visible.

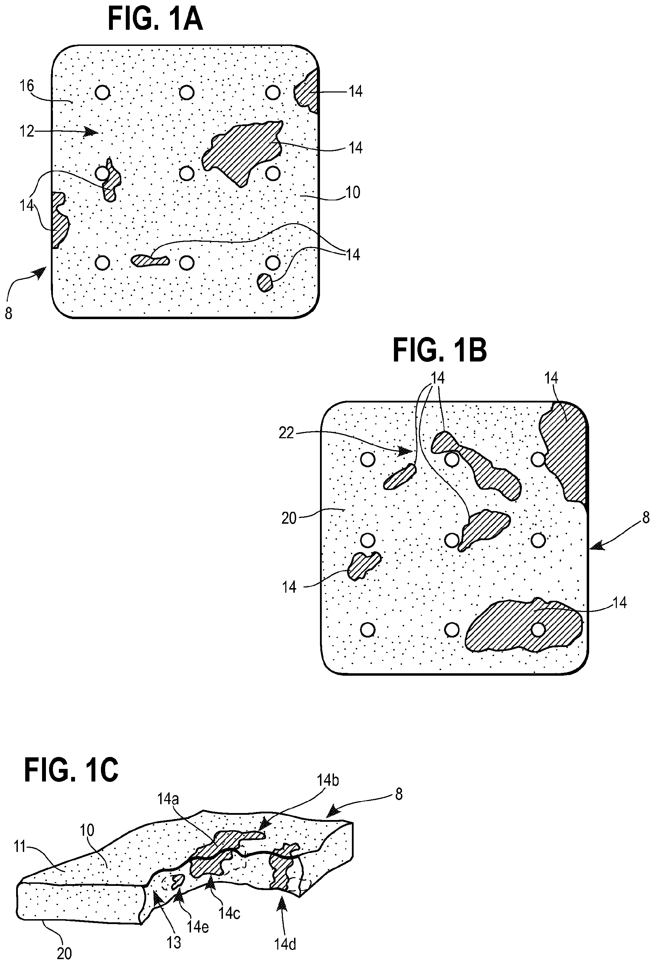

Turning to more of the specifics and first referring to FIGS. 1A-1C, a cracker 8 is illustrated having opposing side surfaces including a first side 10 with a marbled surface 12. The marbled surface 12 generally includes one or more inclusions 14 incorporated in a cracker portion formed from a dough 16. By one approach, the cracker has a single dough or cracker portion forming a continuous cracker matrix with the inclusions therein. In one form, the dough 16 has a baked, fried, or otherwise cooked dough appearance, such as a light color along with a relatively smooth texture. The inclusions 14 may have a contrasting appearance when compared with the dough 16. For example, the inclusions 14 may have a dark color, such as red, orange, brown, yellow, or green depending on the source of the inclusion. Further, the inclusions 14 may have a rougher texture when compared with the dough 16. However, it should be understood that the inclusions 14 may have any contrasting appearance when compared with the dough appearance. The inclusions have a size and a shape such that they remain visually identifiable and maintain at least a portion of its physical integrity from the source providing the inclusion.

The inclusions 14 may also have an expanded, elongated, or smeared-type appearance on the outer surface of the cracker such that the edges of the inclusions 14 are ragged and not necessarily smooth. So formed, the inclusion still retains an integrity of its source material so that the inclusions still maintain a contiguous portion thereof. Additionally, the inclusions 14 need not have a solid color, but instead may have color variations along with other colors interspersed therein. For example, the inclusions may have a generally orange color, but may also include darker spots which may be indicative of deeper inclusions. The color differences may vary within a single inclusion 14 and may also vary from amongst the plurality of inclusions 14. Similarly, the texture of the inclusion 14 may also vary within a single inclusion 14 and may also vary amongst the plurality of inclusions.

As shown in FIG. IB, a second or opposite side 20 of the cracker 8 from FIG. 1A is shown. In one form, the second side 20 also has a generally marbled surface 22 including a plurality of inclusions 14. The inclusions 14 on the second side 20 need not be the same inclusions 14 as on the first side 10.

FIG. 1C is a cross-sectional view of the cracker 8 showing that the inclusions 14 may not only extend about an outer surface 11 of the cracker 8, but one or more of the inclusions may also extend at least partially internally to a body 13 of the cracker 8. For example, inclusion 14a may have a portion 14b that is smeared about the outer surface 11 and the same inclusion 14a may also have a portion 14c that is embedded or extends internally to the cracker body 13. However, some of the inclusions, such as inclusion 14d shown in FIG. 1C may extend from the first side 10 internally through the cracker body 13 to the second side 20 such that the same inclusion 14d may be visible on both sides 10 and 20. That is, one or more inclusions may have a portion visibly identifiable and/ or smeared on each of the opposing cracker surfaces with an interconnecting portion extending through and embedded in the cracker body as shown by the exemplary inclusion 14d. In other cases, some of the inclusions, such as inclusion 14e, may be wholly contained within the body 13 of the cracker. The cracker 8 may contain any combination of the various types of inclusions.

The inclusions 14 are generally un-evenly sized pieces, granules, or particles of vegetables. By one approach, the pieces may have a size characterized as a -3 + 10 US standard mesh size (6730 to 2000 microns. That is, 100 percent of the pieces may fall through a US 3 standard mesh (6730 microns) and 100 percent of the pieces may be retained in a US 10 standard mesh (2000 microns) sieve. In another approach, the unevenly sized pieces may vary in size from 0.159cm to 0.635cm (1/16 inch to 1/4 inch); however other sizes may be used depending on the application, vegetable, or other inclusion. Further, the inclusions 14 may cover 5 to 50 percent of the exposed surface area of the first side 10 and/or the second side 20 and, at the same time, may also cover 5 to 50 percent of a cross-section of the cracker and, in some cases, 5 to 30 percent of a cracker cross-section such that the cracker has a greater portion of the inclusions smeared on the outer surfaces than within a body of the cracker.

By one approach, an effective inclusion to form a marbled appearance may also be related to the size and thickness of the cracker. For instance, the size of the inclusion may be related to the cross-sectional thickness of the final cracker. Thus, an inclusion prior to mixing in the cracker dough ranging in size characterized by the mesh sizes above or from 0.159cm to 0.635cm (1/16 inch to 1/4 inch) may be used in a cracker having a final thickness of 0.20cm to 0.51cm (0.08 inches to 0.2 inches) in order to achieve the desired marbled appearance. Selection of such cracker thickness and pre-inclusion sizes is effective to permit sufficient inclusion material to be smeared on the surfaces. If the inclusion is too small or the cracker is too thick, then the inclusion may not form the marbled appearance because it may not have sufficient inclusion portions exposed on the outer surfaces. The marbled crackers have a marbling ratio of inclusion size to cracker thickness of 0.7 to 1.5 in order to achieve the desired marbled surface effects.

As mentioned above, the inclusions are root vegetables such as sweet potatoes, yams, tubers, carrots, beets, and the like. The inclusions may also be legumes such as peas, beans, and the like. To be an effective inclusion, the vegetables generally include effective levels of starch, sugar, and fiber that enable the vegetable to sufficiently hydrate and soften to enable smearing or spreading on the cracker surface, but at the same time, the starch, sugars, and fiber also enable to the inclusion to remain intact in the finished cracker and retain its structural integrity and/ or its product or piece identity after hydration and smearing. As mentioned above, the inclusion may have 15 to 60 percent sugar. Effective inclusions may also have less than 12 percent starch, such as 4 to 12 percent starch. Suitable inclusions also have at least 3 percent fiber and in some cases 3 to 10 percent fiber. The inclusions may also be dehydrated prior to incorporation into the dough. In some approaches, the inclusions may have 0.5 to 5 percent moisture prior to hydration and incorporation into the cracker or dough.

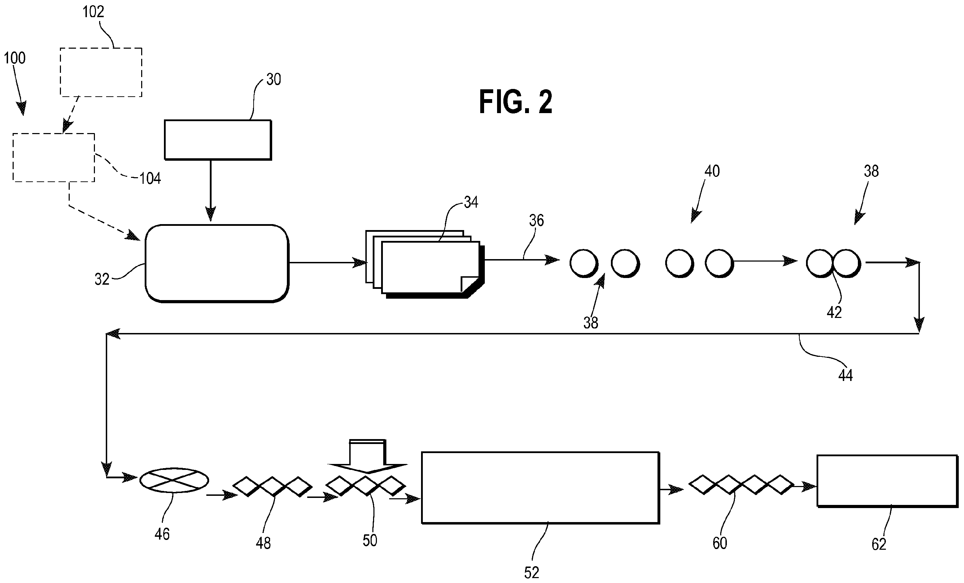

Turning to FIG. 2, one exemplary method for manufacturing the marbled cracker is illustrated. In this exemplary method, the ingredients 30 may be first combined in a dough mixer 32 to form dough where inclusions are hydrated in a manner effective to maintain inclusion structure and integrity. This may occur in a single dough mixing step 32 or may occur in a two-step process where dehydrated inclusions are pre-hydrated with a portion of the process water. The mixed dough may then be laminated 34 to formed sheets of dough that are then processed through one or more reducing rolls 38, which may include initial reducing rolls 40 and final gauge rolls 42. By one approach, it is the final gauge rolls that sets the cracker thickness and forms the marbled surface by smearing at least a portion of the inclusions exposed on the outer surfaces of the sheeted dough. The dough from the final gauge rolls having a marbled surface is then sent to a cutter 46, an optional salting station 48, and then through an optional steam curtain 50 prior to a baking oven 52. As the baked crackers emerge from the oven, they may have an application of oil or other seasonings at step 60 prior to packaging 62. Each of these process steps will be descried in more detail below.

The dough may include a variety of ingredients that may be combined in a variety of manners. For example, the dough composition may include flour, water, starches, leavening agents, oils, seasonings, flavors, and the inclusions. More specifically, the dough composition may include flour, water, salt and seasonings, sodium bicarbonate, oil, corn starch, mono-calcium phosphate and other materials. By one approach, an exemplary dough composition is provided in Table 1 below. When including the inclusions, it has been discovered that in some instances it may be advantageous to use higher starch levels in the dough than commonly used in crackers and chips. The higher starch levels may aid in forming the desired cracker or chip-like texture when high levels of inclusions are included in the dough. In some approaches, an effective amount of starch in the dough to an amount of inclusion(s) in the dough is 0.2 to 4 and, in other approaches, 0.5 to 2. Such ratio of dough start to inclusion amount permits high levels of inclusions suitable for smearing on a surface yet retains the ability to form the desired cracker texture.

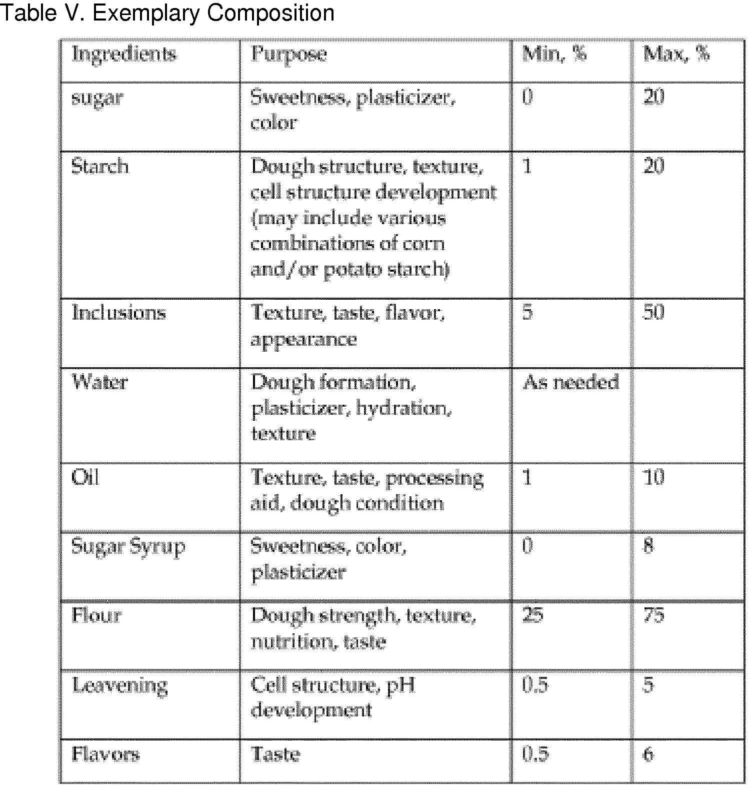

The ingredients include an inclusion or an inclusion composition having a plurality of visually identifiably pieces or particulates of vegetables. The inclusion composition may include pieces, such as diced pieces of vegetables. In one form, the inclusion composition includes vegetable pieces where the vegetable contains greater than 15 percent sugar. For example, the vegetable pieces may include 2 to 60 percent sugar, and in some cases, 20 to 60 percent sugar. While not wishing to be limited by theory, it is believed that such range of sugar in the vegetables may aid in forming the marbled appearance while still retaining integrity of the vegetable pieces. For example, it is believed that such levels of sugar in the vegetables aid with compression and flattening of the pieces while still maintaining vegetable integrity. In another form, the inclusion composition may also include dehydrated vegetables that are more suitable for storage that may then later be rehydrated during processing. Suitable inclusions include root vegetables such as sweet potato, yams, beet roots, tubers, carrots
and mixtures thereof. Additional details regarding these compositions and orders of addition will be described in more detail below.

When prepared using dehydrated vegetable pieces, it may be preferable to pre-hydrate 100 the dry inclusion pieces 102 in water in order to soften the pieces prior to mixing the vegetable pieces with the remaining dough ingredients as shown by the hashed lines in FIG. 2. By one approach, a portion of the process water 104 used to make the cracker dough is blended with the dehydrated inclusion pieces 102. By one approach, 50 to 60 percent of the formulation's water requirements are blended with the dehydrated vegetable pieces in this pre-hydration step. The dehydrated vegetables may then be hydrated to 40 to 50 percent moisture prior to blending with the other dough ingredients. In another approach, the water used in this pre-hydration step may be at least 60°C (140°F), and preferably 65.6°C to 76.7°C (150 to 170°F). Such water temperatures are selected to quickly hydrate the vegetables and also to maintain piece integrity. Higher water temperatures may negatively affect the physical integrity of the vegetable pieces. In order to maintain inclusion integrity in the final product, selection of inclusion characteristics (i.e., sugar, fiber, moisture, and the like as discussed above), as well as selection of processing conditions, are some factors discovered to be desirable to achieve the smeared crackers herein. With pre-hydration, the inclusion composition is usually softened and still maintains piece integrity so that when it is combined with the dough composition, the separation of the materials is minimized. If the inclusion composition is substantially harder than the dough composition, it is possible that the materials may separate during processing, resulting in gaps and holes in the finished product. Generally, the inclusion material is hydrated and softened such that it has a moisture content of 40 to 50 percent, and in some cases, 45 to 50 percent.

After pre-hydrating the inclusion pieces, the hydrated inclusions and mixed with the other dough ingredients and the remaining portion of the water. While not wishing to be limited by theory, this two-step hydration and mixing may be helpful to properly hydrate the starches in the inclusions. If the inclusions are hydrated in a single step with all the process water, there may be competition between the inclusions and the other ingredients in the formula or dough for the water. In such case, the inclusions may not be properly hydrated. When the pre-hydrated inclusions are added with the remaining dough ingredients, the second portion of the process water is then added to the dough. This second portion may be 40 to 50 percent of the water requirements. It is also
believed that surface moisture from the pre-hydrated inclusions may also contribute water to the dough formulation.

By one approach, the dough may include 95 percent dough ingredients to 5 percent inclusions up to 50 percent dough ingredients to 50 percent inclusions.

In the dough mixer, the hydrated inclusions and other dough ingredients are mixed effective to properly blend the ingredients but maintain inclusion integrity at the same time. This may be accomplished, in one approach, by using 20 to 60 RPMs for a total mix time of 6 to 12 minutes. Other speeds and times may also be used so long as inclusion integrity and structure is maintained. The finished dough may have a temperature of 43.3°C to 54.4°C (110 to 130°F), which is effective to properly blend the dough ingredients and still maintain the inclusion integrity at the same time. In some approaches, the mix procedure may also add oil in a separate stage at the end of dough mixture, this may be used to help with dough stickiness and processing.

It should also be noted that the dough composition need not be combined with the inclusion composition in the dough mixer 32. Instead, the dough composition may be combined with the inclusion composition at a lamination stage 34. In this form, only the ingredients for the dough composition will be added at the dough mixer 32. However, the inclusion composition may be combined with the dough composition at the dough mixer 32. Further, it should be noted that components of the dough composition may alternatively be provided in the inclusion composition and vice versa. For example, water may be provided in one or both of the dough and inclusion compositions. However, it has been found that in many cases, depending on the inclusion composition, it may be desirable to incorporate at least a portion of the total water in the dough composition as the inclusion composition may absorb most, in not all, of the water such that the dough composition may not be provided with sufficient water.

In some instances, the flour and hydrated inclusion portions may be thermally treated during dough mixing. Thermal treatment may help hydrate the inclusions and gelatinize or cook at least portions of the starch in the wheat flours. This treatment tends to impart a more chip-like texture to the finished product. By one approach, thermal treatment may be injecting steam at 103400Pa to 275800Pa (15 to 40 psi) under atmospheric pressure for 5 to
15 minutes while mixing dough ingredients in the dough mixer in order to gelatinize and/or cook the materials. The resultant dough may be 54.4°C to 65.6°C (130 to 150°F).

After dough preparation 32, the dough composition is laminated and sheeted through a series of reducing and gauge rolls. Regardless of the dough preparation process described above, the dough is combined with inclusion composition by the time the materials pass through the lamination stage 34 to form a combined mixture. The mixed dough is dumped out of the mixer and processed through a series of rolls that form a sheet 0.64cm (1 /4 inches) thick (in one approach). The sheet may then be folded over into 3 to 5 total layers totalling 2.54cm to 3.18cm (1 to 1.25 inches) thick. Then, the folded dough is sent through a series of reduction rolls to the final thickness. Generally, the lamination stage 34 forms the combined mixture into one or more laminated mixtures or sheets of dough with inclusions therein.

The laminated mixture is then transferred, via line 36, to one or more reducing rolls 38 for reducing the thickness of the laminated sheets of dough. The rolls 38 can include a variety of different types of rolls. For example, as shown in FIG. 2, the process includes reducing rolls 40 and gauge rolls 42. Generally the reducing rolls are a pair of opposing rolls having a gap thickness of 1/4 (in one approach) to initially reduce the thickness of the laminated sheet. The reduced thickness laminated mixture may then travel to the final gauge rolls 42 that are a pair of opposing rolls having a gap thickness of 0.10cm (0.04 inches) to reduce the thickness to its final, unbaked thickness and produced a continuous dough sheet having the marbled appearance. Other gap sizes may also be used as needed. The final gauge rolls and the size of the inclusions are such that these rolls produce the marbled appearance of the inclusions in the dough. By one approach, the reducing rolls having a smooth surface with the top roll on the finish gauge roll turning 15 to 25 percent faster to release the dough sheet from the top roll.

As noted above, the inclusion composition is generally softened so that separation is minimized between the dough composition and the inclusion composition. If the inclusion composition is much harder or does not have proper water content, the compositions may separate. Further, as the inclusion composition is softened, it is more suitable for spreading or streaking, such as when it is passed through the rollers 38. If the inclusions are not properly hydrated as described above, they may not form the desired marbled appearance or may not even make it through the final gauge rolls. If not properly
hydrated, the inclusions may be too hard and get stuck at the final gauge rolls causing streaking in the dough.

The final gauge rolls are effective to form the marbled appearance on the outer surface of the laminated sheets. By one approach, it should be noted that as the laminated material passes through the rollers 38, the rollers provide sufficient pressure to cause the inclusion composition to spread or streak, but not so much pressure such that the inclusion composition becomes indistinguishable from the dough composition. In this regard, generally the laminated material is not passed through high shear rollers.

After passing through the rollers 38, the material is transferred, as at line 44, to a cutter 46 whereby the material may be cut into desired shapes and sizes to form a cut material. The cut material may then optionally be transferred to a salt stage 48 whereby salt and other flavorings may be added to the cut material. Application of salt and other flavorings at this point may help aid in forming the marbled appearance because salt and oil toppings may help enhance the differences between the dough and inclusion in the finished product.

Further, in another optional step, the cut material may be transferred through a steam curtain 50 prior to entering an oven 52. The steam is provided in an amount and at a temperature effective to help maintain the humidity during the initial heating stages in the oven 52 as described further below. By one approach, the steam curtain includes a series of 3 to 5 steam manifolds that are contained in an enclosure prior to the entrance to the oven. The exit of the steam enclosure includes a hood or other enclosure that covers the product as it exists the steam curtain enclosure and is carried in to the oven. In manner, the hood traps at least a portion of the steam and carriers it into the first zone of the oven. In some approaches, the product is carried by a conveyor belt or other transport through the steam curtain and into the oven. The motion of the transport tends to draw or carry steam from the steam curtain into the first zone of the oven. The steam provides a more optimal baking environment to improve moisture bake out, color, and texture of the finished cracker. By one approach, the steam curtain is placed right before the entrance to the baking oven and the steam nozzles are 7.62 to 15.24cm (3 to 6 inches) above the product and conveyor belt carrying the product. The steam may be 34470Pa to 275790Pa (5 to 40 psi) and at a temperature of 82.2 to 100°C (180 to 212°F).

By one approach, the steam is applied via a series of 3 to 5 pipes with injection nozzles 1.27cm to 5.08cm (0.5 to 2 inches) apart with inserts that isolate condensate and only allow steam onto the product such that no or substantially no condensate or water accumulates on the cracker surface. The steam curtain includes an enclosure that surrounds the manifolds with an entrance enclosure and an exit enclosure at the entrance and exit of the steam curtain to substantially retain steam within the enclosure. It is believed that the steam carried into the first zone of the oven enhances the relative humidity in the oven and leads to a higher temperature in the first two oven zones.

In the oven, the cut and steamed material is then baked or otherwise cooked at 135 to 232°C (275 to 450°F) for 3 to 7 minutes to provide a baked or cooked product. The finished moisture content of the cracker is 1.5 to 3 percent.

While not wishing to be limited by theory, the steam curtain 50 is effective to delay dehydration of the outer surface of the cracker in the first zone of the oven to help obtain a more uniform baking or moisture bake out of the cracker. The steam curtain permits a higher temperature in the first oven zone. If the steam curtain is not used, then the outer surfaces of the cracker may dry or bake faster in the initial stages of the oven, which tends to form a crust on the crackers. If a crust forms, it may hinder the moisture bake out and drying of the inner portions of the cracker. By one approach, due to the hydrated inclusions used in the crackers described above, additional water and or steam treatment may be used in the dough preparation steps that would not necessarily be properly baked or dried in the oven if the steam curtain is not used. The dough with the inclusions is generally at 25 to 35 percent moisture (in some cases 30 percent moisture) and may contain as much as 5 to 20 percent more water than a standard cracker formulation. Thus, the steam curtain is effective in such circumstances to help bake and properly dry the cracker to a final moisture content of 1 to 4 percent and controls expansion, which results in a crispier/ crunchier texture.

After the oven 52, the cooked product may also be optionally oiled and seasoned, such as at stage 60 prior to being transferred to packaging 62.

Advantages and embodiments of the crackers described herein are further illustrated by the following examples; All percentages are by weight unless otherwise indicated.

### Example 1

In one form, crackers may be made with wheat flour (unenriched and/ or whole grain), starches (potato and/ or corn), sugar (granular and syrup), real dried vegetable pieces, salt, seasoning, oil, and leaveners. The starches, granular sugar and dried vegetables can be mixed with hot water (65.6°C to 82.2°C (150-180°F)) in the initial mixing phase. This allows the starches to hydrate properly as well as softens the vegetable pieces enough to allow them to process through sheeting without tearing the dough. The remaining ingredients can be mixed to create a finished dough. The dough can be held for 30 to 120 minutes, and will be between 43.3°C to 51.7°C (110°F to 125°F). Once holding is complete dough can be sheeted.

The dough will proceed through the laminating process followed by a series of 2-3 reduction rolls. The crackers can be then cut and salted. A series of 3-5 steam manifolds are set up at the entrance to the oven, with a hood/ enclosure to ensure the steam stays on the product and enters the oven. The crackers can pass through the steam and into the oven for baking. The steam helps maintain a more optimal baking environment to improve moisture bake out, color and texture of the finished cracker. The finished crackers are oiled and then go through a post oven drier and on to packaging. Alternatively, the crackers may be baked/dried and include a post baking application of oil. The finished crackers are dump filled into bags that are then fed into cartons.

### Example 2

In this Example, a non-thermally processed sweet potato containing cracker was prepared using the components listed in Table 2. After baking, salt and oil are applied to the cracker. The sweet potato is dehydrated un-evenly sized pieces characterized as -3+10 as described above.

**Table 2: Vegetable Cracker Formula**

| **Description** | **∼Weight, kg (lbs)** |
|---|---|
| **Dough (pre bake)** | |
| Sweet Potato Dehydrated | 14.5 (32) |
| Sweetener | 4.1 (9) |
| Starch-potato | 6.8 (15) |
| Oil | 2.7 (6) |
| Sugar syrup | 2.3 (5) |
| Leavening agents | 1.4 (3) |
| Seasoning and Flavour | 0.73 (1.6) |
| Water | 22.7 (50) |
| Flour | 45.4 (100) |

The sweet potato was first hydrated with a portion of the water. Then the pre-hydrated sweet potatoes were combined with the remaining ingredients and mixed for 6 to 12 minutes at 20 to 60 RPM. Water temperature was 60°C to 82.2°C (140 to 180°F).

### Example 3

In Example 3, a thermally processed sweet potato cracker was prepared using the components listed in Table 3.

**Table 3: Sweet Potato Thermally Processed**

| **Ingredients** | **Percent of Dough** |
|---|---|
| **Group 1** | |
| Wheat Flour | 34.93% |
| Whole wheat flour | 12.87% |
| Sweet potato granules (0.48cm (3/16") or smaller) | 15.32% |
| Salt | 0.41% |
| Water | 27.57% |

| **Group 2** | |
|---|---|
| Starch | 7.36% |
| Leavening | 0.32% |

| **Group 3** | |
|---|---|
| Oil | 1.23% |

Generally, the sweet potato granules were hydrated in water at a temperature of 21.1 to 23.9°C (70 to 75°F) for approximately 10-15 minutes. Next, the flour, whole wheat flour, salt, vegetable granules and room temperature water (21.1 to 23.9°C (70 to 75°F)) were combined in a dough mixer (Shaffer) to gelatinize/ cook the material by injecting steam to approximately 71.1°C to 82.2°C (160-180°F) with mixing at 20 RPM for 10 to 15 minutes.

Next, the ingredients listed in Group 2, except for the oil, were added to the gelatinized/ cooked material and allowed to mix at 20 RPM for 2 minutes. Then the oil was added and mixed at 20 RPM for 2 minutes. The dough temperature was approximately 54.4°C to 65.6°C (130-150°F). The dough was then sheeted without lamination and then baked in an over to a maximum moisture content of 4 percent. The material was then finished in a dielectric or post convection dryer to a moisture content of 1-3 percent. This Example resulted in a chip-like product having a marbled surface appearance.

### Example 4

In Example 4, a non-thermally processed sweet potato cracker was prepared using the components listed in Table 4. The sweet potato pieces were similar in size to Example 2.

**Table 4: Sweet Potato Non-Thermally Processed**

| **Ingredients** | **Percent of Dough** |
|---|---|
| **Group 1** | |
| Sweetener | 4.25% |
| Starch | 6.8% |
| Sweet potato | 14.3% |

| **Group 2** | |
|---|---|
| Water | 22.57% |

| **Group 3** | |
|---|---|
| Oil | 2.9% |
| Sugar Syrup | 2.4% |

| **Group 4** | |
|---|---|
| Flour | 44.6% |
| Leavening | 1.4% |
| Flavour and Seasoning | 0.6% |

Generally, the sweetener, starches (which may be potato, corn, or combinations thereof) and sweet potato pieces are combined and mixed for thirty seconds. The water at 65.6°C (150°F) is then added and mixed on high (60 RPM) for 3 minutes. Next, the oil and syrup are added and mixed on high (60 RPM) for 1 minute. Then, the flour (which can be unenriched flour, graham flour, and/ or combinations thereof); leavening (which can be sodium bicarbonate, calcium bicarbonate, and/ or mixtures thereof); and other ingredients and additional water (0.45kg (1 pound)) are added a mixed on high for 7 minutes.

### Example 5

In Example 5, another non-thermally processed sweet potato cracker was prepared using the components listed in Table 5.

**Table 5: Sweet Potato Non-Thermally Processed**

| **Ingredients** | **Percent of Dough** |
|---|---|
| **Group 1** | |
| Sweetener | 4.1% |
| Starch | 6.7% |
| Sweet Potato | 15.8% |

| **Group 2** | |
|---|---|
| Water | 22.1% |

| **Group 3** | |
|---|---|
| Oil | 2.9% |
| Syrup | 2.4% |

| **Group 4** | |
|---|---|
| Flour | 43.8% |
| Leavening | 1.37 |
| Flavors and Seasoning | 0.56 % |

### Example 6

In this Example, another non-thermally processed sweet potato cracker was prepared using the components listed in Table 6.

**Table 6: Sweet Potato Non-Thermally Processed**

| **Ingredients** | **Percent of Dough** |
|---|---|
| **Group 1** | |
| Sweetener | 4.0% |
| Starch | 6.5 |
| Sweet Potato | 16.6% |

| **Group 2** | |
|---|---|
| Water | 22.8% |

| **Group 3** | |
|---|---|
| Oil | 2.8% |
| Syrup | 2.35% |

| **Group 4** | |
|---|---|
| Flour | 42.7% |
| Leavening | 1.33 |
| Flavor and Seasoning | 0.55 |

## Claims

1. A cracker having a marbled surface, the cracker comprising:
a cracker portion formed from a dough composition comprising flour, starches, sugars, oil, flavorings, and leaveners, the dough composition having a cracker appearance;
an inclusion portion having inclusions with 2 to 60 percent sugar so that the inclusion portion includes visually identifiable pieces of the inclusions, the inclusions remaining intact and smeared about a surface of the cracker such that an inclusion appearance has at least one of a contrasting color, shading and texture when compared to the cracker portion; and
at least a portion of each of the cracker portion and the inclusion portion being visible on the marbled surface, the inclusion portion forming at least one contiguous inclusion covering at least 1 percent of the marbled surface where at least one of the visually identifiable pieces of the inclusions has a smeared portion on the cracker surface and an embedded portion extending into a body of the cracker,
wherein the visually identifiable pieces of the inclusions are vegetable pieces selected from the group consisting of sweet potatoes, yams, beet roots, tubers, carrots and mixtures thereof,
wherein the cracker has a select ratio of inclusion size to thickness of 0.7 to 1.5 to form the inclusion appearance.

2. The cracker of claim 1 wherein the inclusion composition has at least one of a contrasting color, a different texture, or a different taste when compared to the cracker portion.

3. The cracker of claim 1 further comprising a plurality of contiguous inclusions covering a total of 5 percent to 50 percent of the marbled surface.

4. The cracker of claim 1 wherein at least one of the visually identifiable pieces of the inclusion composition extends from the marbled surface towards an interior portion of the cracker and remains intact and smeared about an opposite surface of the cracker so that the at least one visually identifiable piece is visually identifiable on opposing surfaces of the cracker.

5. The cracker of claim 1 wherein the cracker has a ratio of starch to amount of inclusion of 0.2 to 4 to permit the inclusions to remain visually identifiable and smear on the surface yet retain a cracker texture.

6. A method for making a cracker having a marbled surface, the method comprising:
pre-hydrating a plurality of dehydrated vegetable pieces selected from the group consisting of sweet potatoes, yams, beet roots, tubers, carrots and mixtures thereof, to form hydrated vegetable pieces;
blending the hydrated vegetable pieces into a dough composition comprising flour, flours, starches, sugars, oil, flavorings, leaveners,
laminating the combined mixture to provide a laminated mixture;
passing the laminated mixture through one or more rolls to create a sheet having a marbled surface formed by at least a portion of the hydrated vegetable pieces smeared on the surface of the crackers, at least a portion of each of the dough composition and the hydrated vegetable pieces being visible on the marbled surface, the hydrated vegetable pieces forming at least one contiguous inclusion covering at least 1 percent of the marbled surface,
wherein the visually identifiable pieces of the inclusions are vegetable pieces,
wherein the cracker has a select ratio of inclusion size to thickness of 0.7 to 1.5 to form the inclusion appearance.

7. The method of claim 6 further comprising the steps of passing the formed composition through a steam curtain and then into an oven.

8. The method of claim 6 wherein the laminated mixture is passed through at least one pair of rolls whereby the hydrated vegetable pieces will smear upon contact with the rolls to form the marbled surface.

9. The method of claim 6 wherein the dehydrated vegetable pieces are in the form of pieces in the range of -3+10 as determined by standard US sieve sizes.

10. The method of claim 9 wherein the dehydrated vegetable pieces contain at least 15 percent sugar.

11. The method of claim 7 wherein the dough composition with the hydrated vegetable pieces has 25 to 35 percent moisture and after drying 1 to 4 percent moisture.

12. The method of claim 6 wherein the hydrating water is greater than 60°C (140°F) so that the vegetable pieces remain visually identifiable in the dough composition.

13. The method of claim 7 wherein the steam pressure is 34.5 to 275.8 kPa (5 to 40 psi) provided from steam nozzles positioned 3 to 6 inches above the surface of the crackers.

## Patentansprüche

1. Cracker mit einer marmorierten Oberfläche, wobei der Cracker Folgendes umfasst:
einen Crackerabschnitt, der aus einer Teigzusammensetzung gebildet ist, die Mehl, Stärken, Zucker, Öl, Geschmacksstoffe und Backtriebmittel umfasst, wobei die Teigzusammensetzung ein Cracker-Aussehen aufweist;
einen Einschlussabschnitt mit Einschlüssen mit 2 bis 60 % Zucker, so dass der Einschlussabschnitt visuell identifizierbare Stücke der Einschlüsse enthält, wobei die Einschlüsse intakt und um eine Oberfläche des Crackers herum verschmiert bleiben, so dass ein Einschlussaussehen mindestens eines aus einer kontrastierenden Farbe, Schattierung und Textur im Vergleich zu dem Crackerabschnitt aufweist; und
wobei zumindest ein Abschnitt sowohl des Crackerabschnitts als auch des Einschlussabschnitts auf der marmorierten Oberfläche sichtbar ist, wobei der Einschlussabschnitt mindestens einen zusammenhängenden Einschluss bildet, der mindestens 1 % der marmorierten Oberfläche bedeckt, wobei mindestens eines der visuell identifizierbaren Stücke der Einschlüsse einen verschmierten Teil auf der Crackeroberfläche und einen eingebetteten Abschnitt, der sich in einen Körper des Crackers erstreckt, aufweist,
wobei die visuell identifizierbaren Stücke der Einschlüsse pflanzliche Stücke sind, ausgewählt aus der Gruppe, bestehend aus Süßkartoffeln, Yamswurzeln, Rote Beete, Knollengewächsen, Karotten und Mischungen davon,
wobei der Cracker ein Auswahlverhältnis von Einschlussgröße zu Dicke von 0,7 bis 1,5 aufweist, um das Einschlussbild zu bilden.

2. Cracker nach Anspruch 1, wobei die Einschlusszusammensetzung mindestens eines von einer kontrastierenden Farbe, einer anderen Textur oder einem anderen Geschmack im Vergleich zu dem Crackerabschnitt aufweist.

3. Cracker nach Anspruch 1, der ferner mehrere zusammenhängende Einschlüsse umfasst, die insgesamt 5 bis 50 % der marmorierten Oberfläche bedecken.

4. Cracker nach Anspruch 1, wobei sich mindestens eines der visuell identifizierbaren Stücke der Einschlusszusammensetzung von der marmorierten Oberfläche zu einem inneren Abschnitt des Crackers erstreckt und intakt bleibt und um eine gegenüberliegende Oberfläche des Crackers verschmiert bleibt, so dass das mindestens eine visuell identifizierbare Stück auf gegenüberliegenden Oberflächen des Crackers visuell identifizierbar ist.

5. Cracker nach Anspruch 1, wobei der Cracker ein Verhältnis von Stärke zu Einschlussmenge von 0,2 bis 4 aufweist, um zu ermöglichen, dass die Einschlüsse visuell identifizierbar bleiben und auf der Oberfläche verschmieren, dennoch eine Cracker-Textur beibehalten.

6. Verfahren zur Herstellung eines Crackers mit einer marmorierten Oberfläche, wobei das Verfahren Folgendes umfasst:
Vorhydratisieren einer Vielzahl von dehydratisierten Pflanzenstücken, ausgewählt aus der Gruppe, bestehend aus Süßkartoffeln, Yamswurzeln, Rote Beete, Knollengewächsen, Karotten und Mischungen davon, um hydratisierte Pflanzenstücke zu bilden;
Beimischen der hydratisierten pflanzlichen Teile in eine Teigzusammensetzung, die Mehl (flour, flours), Stärke, Zucker, Öl, Geschmacksstoffe, Backtriebmittel umfasst,
Laminieren der kombinierten Mischung, um eine laminierte Mischung bereitzustellen;
Leiten der laminierten Mischung durch eine oder mehrere Walzen, um eine Lage mit einer marmorierten Oberfläche zu erzeugen, die durch mindestens einen Teil der hydratisierten Pflanzenstücke gebildet wird, die auf der Oberfläche der Cracker verschmiert sind, wobei mindestens ein Abschnitt von jedem der Teigzusammensetzung und der hydratisierten Pflanzenstücke auf der marmorierten Oberfläche sichtbar ist, wobei die hydratisierten Pflanzenstücke mindestens einen zusammenhängenden Einschluss bilden, der mindestens 1 % der marmorierten Oberfläche bedeckt,
wobei die visuell identifizierbaren Stücke der Einschlüsse pflanzliche Stücke sind,
wobei der Cracker ein Auswahlverhältnis von Einschlussgröße zu Dicke von 0,7 bis 1,5 aufweist, um das Einschlussbild zu bilden.

7. Verfahren nach Anspruch 6, ferner umfassend die Schritte des Leitens der gebildeten Zusammensetzung durch einen Dampfvorhang und dann in einen Ofen.

8. Verfahren nach Anspruch 6, wobei die laminierte Mischung durch mindestens ein Paar von Walzen geführt wird, wodurch die hydratisierten Pflanzenstücke beim Kontakt mit den Walzen verschmieren, um die marmorierte Oberfläche zu bilden.

9. Verfahren nach Anspruch 6, wobei die dehydratisierten Pflanzenstücke in der Form von Stücken im Bereich von -3+10, wie durch Standard-US-Siebgrößen bestimmt, vorliegen.

10. Verfahren nach Anspruch 9, wobei die dehydratisierten Pflanzenstücke mindestens 15 % Zucker enthalten.

11. Verfahren nach Anspruch 7, wobei die Teigzusammensetzung mit den hydratisierten Pflanzenstücken 25 bis 35 % Feuchtigkeit und nach dem Trocknen 1 bis 4 % Feuchtigkeit aufweist.

12. Verfahren nach Anspruch 6, wobei das hydratisierende Wasser mehr als 60 °C (140 °F) aufweist, so dass die Pflanzenstücke in der Teigzusammensetzung visuell identifizierbar bleiben.

13. Verfahren nach Anspruch 7, wobei der Dampfdruck 34,5 bis 275,8 kPa (5 bis 40 psi) beträgt, bereitgestellt von Dampfdüsen, die 8 bis 15 Zentimeter (3 bis 6 Inch) über der Oberfläche der Cracker positioniert sind.

## Revendications

1. Biscuit salé ayant une surface marbrée, le biscuit salé comprenant :
une partie de biscuit salé formée à partir d'une composition de pâte comprenant de la farine, des amidons, des sucres, de l'huile, des assaisonnements et des agents levants, la composition de pâte ayant une apparence de biscuit salé ;
une partie d'inclusion ayant des inclusions avec 2 à 60 pour cent de sucre de sorte que la partie d'inclusion inclut des morceaux visuellement identifiables des inclusions, les inclusions restant intactes et étalées autour d'une surface du biscuit salé de telle sorte qu'une apparence d'inclusion a au moins l'une parmi une couleur, une nuance et une texture qui contraste par comparaison avec la partie de biscuit salé ; et
au moins une partie de chacune parmi la partie de biscuit salé et la partie d'inclusion étant visible sur la surface marbrée, la partie d'inclusion formant au moins une inclusion contiguë couvrant au moins 1 pour cent de la surface marbrée où au moins un des morceaux visuellement identifiables des inclusions a une partie étalée sur la surface de biscuit salé et une partie intégrée s'étendant dans un corps du biscuit salé,
dans lequel les morceaux visuellement identifiables des inclusions sont des morceaux de légumes choisis dans le groupe constitué de patates douces, ignames, racines de betteraves, tubercules, carottes et des mélanges de ceux-ci,
dans lequel le biscuit salé a un rapport sélectionné de la taille d'inclusion à l'épaisseur de 0,7 à 1,5 pour former l'apparence d'inclusion.

2. Biscuit salé selon la revendication 1, dans lequel la composition d'inclusion a au moins l'une parmi une couleur contrastée, une texture différente, ou un goût différent par comparaison avec la partie de biscuit salé.

3. Biscuit salé selon la revendication 1, comprenant en outre une pluralité d'inclusions contiguës couvrant un total de 5 pour cent à 50 pour cent de la surface marbrée.

4. Biscuit salé selon la revendication 1, dans lequel au moins l'un des morceaux visuellement identifiables de la composition d'inclusion s'étend à partir de la surface marbrée vers une partie intérieure du biscuit salé et reste intact et étalé autour d'une surface opposée du biscuit salé de sorte que ledit au moins un morceau visuellement identifiable est visuellement identifiable sur des surfaces opposées du biscuit salé.

5. Biscuit salé selon la revendication 1, dans lequel le biscuit salé a un rapport de l'amidon à la quantité d'inclusion de 0,2 à 4 pour permettre aux inclusions de rester visuellement identifiables et de s'étaler sur la surface tout en conservant une texture de biscuit salé.

6. Procédé de fabrication d'un biscuit salé ayant une surface marbrée, le procédé comprenant :
la pré-hydratation d'une pluralité de morceaux de légumes déshydratés choisis dans le groupe constitué de patates douces, ignames, racines de betteraves, tubercules, carottes et des mélanges de ceux-ci, pour former des morceaux de légumes hydratés ;
le mélange des morceaux de légumes hydratés dans une composition de pâte comprenant de la farine, des farines, des amidons, des sucres, de l'huile, des assaisonnements, des agents levants,
la stratification du mélange combiné pour fournir un mélange stratifié ;
le passage du mélange stratifié à travers un ou plusieurs rouleaux pour créer une feuille ayant une surface marbrée formée par au moins une partie des morceaux de légumes hydratés étalée sur la surface des biscuits salés, au moins une partie de chacun parmi la composition de pâte et les morceaux de légumes hydratés étant visible sur la surface marbrée, les morceaux de légumes hydratés formant au moins une inclusion contiguë couvrant au moins 1 pour cent de la surface marbrée,
dans lequel les morceaux visuellement identifiables des inclusions sont des morceaux de légumes,
dans lequel le biscuit salé a un rapport sélectionné de la taille d'inclusion à l'épaisseur de 0,7 à 1,5 pour former l'apparence d'inclusion.

7. Procédé selon la revendication 6, comprenant en outre les étapes consistant à faire passer la composition formée à travers un rideau de vapeur puis dans un four.

8. Procédé selon la revendication 6, dans lequel le mélange stratifié est passé à travers au moins une paire de rouleaux de telle manière que les morceaux de légumes hydratés s'étalent lors d'un contact avec les rouleaux pour former la surface marbrée.

9. Procédé selon la revendication 6, dans lequel les morceaux de légumes déshydratés sont sous la forme de morceaux dans la plage de -3+10 telle que déterminée par des dimensions de tamis US normalisées.

10. Procédé selon la revendication 9, dans lequel les morceaux de légumes déshydratés contiennent au moins 15 pour cent de sucre.

11. Procédé selon la revendication 7, dans lequel la composition de pâte avec les morceaux de légumes hydratés a 25 à 35 pour cent d'humidité et, après séchage, 1 à 4 pour cent d'humidité.

12. Procédé selon la revendication 6, dans lequel l'eau d'hydratation est à plus de 60 °C (140 °F) de sorte que les morceaux de légumes restent visuellement identifiables dans la composition de pâte.

13. Procédé selon la revendication 7, dans lequel la pression de vapeur va de 34,5 à 275,8 kPa (5 à 40 psi), fournie à partir de buses à vapeur positionnées 8 à 15 centimètres (3 à 6 pouces) au-dessus de la surface des biscuits salés.
